# EUROPÄISCHE PATENTANMELDUNG

(11) **EP 1 481 784 A1**
(43) Veröffentlichungstag der Anmeldung: **01.12.2004**
(21) Anmeldenummer: 03011994.5
(22) Anmeldetag: 28.05.2003
(51) Int. Cl.: B29C 47/50, B29C 47/08

(54) **Anlage zum Aufbereiten von Stoffen**

(71) Anmelder: Coperion Werner & Pfleiderer GmbH & Co. KG, 70469 Stuttgart (DE)
(72) Erfinder: Munz, Rainer, 71540 Murrhardt (DE); Strecker, Jürgen, 70825 Korntal (DE)
(74) Vertreter: Rau, Manfred, Dr. Dipl.-Ing.

(57) **Zusammenfassung**

Eine Anlage zum Aufbereiten von Stoffen weist eine erste Schneckenmaschine (1) und eine dieser nachgeordnete zweite Schneckenmaschine (2) auf. Zwischen den beiden Schneckenmaschinen (1, 2) ist eine Übergabe-Zone (28) ausgebildet, in der eine radial zu den Achsen (12a, 13a) der Gehäuse-Bohrungen (12, 13) der ersten Schneckenmaschine (1) verlaufende und zur zweiten Schneckenmaschine (2) gerichtete Übergabe-Öffnung vorgesehen ist. Die mindestens eine Gehäuse-Bohrung (12, 13) der ersten Schneckenmaschine (1) ist in Richtung ihrer Achse (12a, 13a) mittels eines Verschließ-Elementes verschließbar.

## Beschreibung

Insbesondere bei der Aufbereitung von Kunststoffen ist es oft sinnvoll, zwei oder mehrere hintereinander angeordnete Extruder vorzusehen, die jeweils nur einzelne Verfahrensschritte der Aufbereitung durchführen. Beispielsweise kann beim Einsatz von Kunststoff in Pulverform das Einziehen des Pulvers und das Aufschmelzen in einem ersten Extruder erfolgen. Die Homogenisierung und der Druckaufbau erfolgen dann in einem zweiten nachgeordneten Extruder. Derartige Hintereinander-Anordnungen von mehreren Extrudern sind beispielsweise aus der EP 1 005 411 B1, der US 3,261,056 und der DE 2 304 088 A bekannt. Bei den aus dem Schrifttum und der Praxis bekannten Anlagen der gattungsgemäßen Art sind die oft viele Tonnen schweren Verbindungsteile nur schwer zu entfernen und wieder einzusetzen, wobei das Entfernen der Verbindungsteile notwendig ist, um die Schnecken-Wellen des ersten Extruders ziehen zu können. Das Ziehen der Schnecken-Welle durch den Bereich der Austrags-Zone ist deshalb in der Praxis üblich, weil am anderen Ende der Motor mit Kupplung und Getriebe vorgesehen ist und ein Ziehen der Schnecken-Welle im zuletzt genannten Bereich große Probleme aufwirft.

Der Erfindung liegt daher die Aufgabe zugrunde, eine Anlage der gattungsgemäßen Art so weiterzubilden, dass die Schnecken-Welle beziehungsweise Wellen der ersten Schneckenmaschine auf besonders einfache und zeitsparende Weise gezogen werden können.

Diese Aufgabe wird erfindungsgemäß durch die Merkmale im Kennzeichnungsteil des Anspruches 1 gelöst. Das Verschließ-Element kann bevorzugt als bewegbarer Körper ausgebildet sein, der gemäß Anspruch 3 mindestens eine Durchgangs-Bohrung aufweist, die in Überdeckung mit der entsprechenden Gehäuse-Bohrung bringbar ist. Gemäß Anspruch 4 kann dieser Körper als Dreh-Körper ausgebildet sein oder gemäß Anspruch 5 als Schiebe-Körper. Gemäß Anspruch 6 kann er als Dreh-Schiebe-Körper ausgebildet sein, wodurch zahlreiche zusätzliche Funktionen realisierbar sind.

Weitere Merkmale, Vorteile und Einzelheiten der Erfindung ergeben sich aus der nachfolgenden Beschreibung mehrerer Ausführungsbeispiele anhand der Zeichnung. Es zeigt
- Fig. 1: einen vertikalen Schnitt durch ein erstes Ausfiihrungsbeispiel einer Anlage nach der Erfindung in einer Schnecken-Wellen-Zieh-Stellung,
- Fig. 2: eine Draufsicht auf die Anlage nach dem ersten Ausführungsbeispiel in teilweise aufgebrochener Darstellung,
- Fig. 3: eine Einzelheit III aus Fig. 1,
- Fig. 4: einen Teil-Schnitt durch die Anlage gemäß der Schnittlinie IV-IV in Fig. 1,
- Fig. 5: eine Teil-Draufsicht auf die Anlage in teilweise aufgebrochener Darstellung mit gegenüber Fig. 2 geänderter BetriebsStellung,

- Fig. 6: einen Schnitt durch Fig. 5 gemäß der Schnittlinie VI-VI in einer ungedrosselten Übergabe-Stellung,
- Fig. 7: den Teil-Schnitt durch Fig. 5 entsprechend der Schnittlinie VI-VI in Drossel-Stellung,
- Fig. 8: einen vertikalen Schnitt durch ein zweites Ausfiihrungsbeispiel einer Anlage nach der Erfindung in einer Verschließ-Stellung,
- Fig. 9: einen vertikalen Teilschnitt durch das zweite Ausfiihrungsbeispiel in einer Schnecken-Wellen-Zieh-Stellung,
- Fig. 10: einen Schnitt gemäß der Schnittlinie X-X in Fig. 9,
- Fig. 11: einen vertikalen Schnitt durch ein drittes Ausführungsbeispiel einer Anlage nach der Erfindung in einer Verschließ-Stellung und
- Fig. 12: einen Teil-Schnitt durch das dritte Ausführungsbeispiel in einer Schnecken-Wellen-Zieh-Stellung.

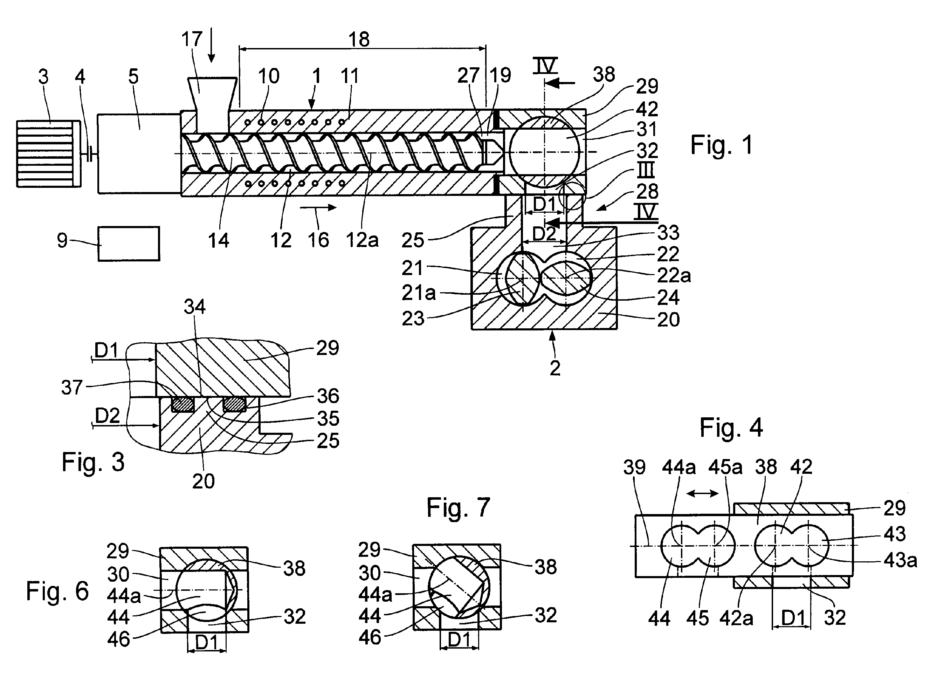

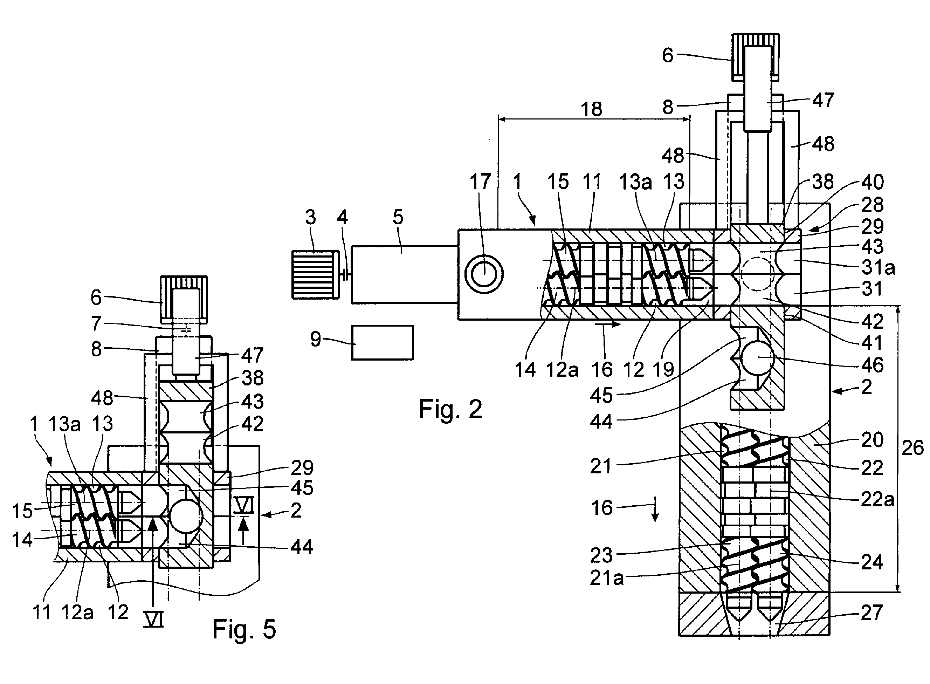

Das in Fig. 1 bis 8 dargestellte erste Ausführungsbeispiel weist einen ersten Extruder 1 und einen zweiten Extruder 2 auf. Der erste Extruder 1 ist oberhalb des zweiten Extruders 2 angeordnet. Der erste Extruder 1 wird mittels eines ersten Motors 3 über eine erste Kupplung 4 und ein erstes Getriebe 5 angetrieben. Der zweite Extruder 2 wird mittels eines zweiten Motors 6 über eine zweite Kupplung 7 und ein zweites Getriebe 8 angetrieben. Die Steuerung der Motoren 3 und 6 erfolgt über eine Steuereinheit 9.

Der erste Extruder 1 weist ein mit einer Heizung 10 versehenes Gehäuse 11 auf, in dem zwei erste Gehäuse-Bohrungen 12, 13 mit zueinander parallelen Achsen 12a, 13a ausgebildet sind, die parallel zueinander verlaufen und etwa 8-förmig ineinander greifen. In diesen Gehäuse-Bohrungen 12, 13 sind zwei erste Schnecken-Wellen 14, 15 angeordnet, die an das erste Getriebe 5 angekuppelt sind. Die Schnecken-Wellen 14, 15 werden gleichoder gegensinnig angetrieben. Der erste Extruder 1 weist einen in einer Förderrichtung 16 hinter dem ersten Getriebe 5 angeordneten ZuführTrichter 17 auf, an den sich eine oder mehrere Behandlungs-Zonen 18 anschließen.

Am Ende des ersten Extruders 1 ist eine Austrags-Zone 19 vorgesehen, aus der der Austrag in Richtung der Achsen 12a, 13a erfolgt. Anstelle von zwei Gehäuse-Bohrungen und entsprechend zwei Schnecken-Wellen können auch nur eine Bohrung oder drei und mehr Bohrungen und eine entsprechende Zahl von Schnecken-Wellen vorhanden sein.

Der zweite Extruder 2 weist ebenfalls ein Gehäuse 20 auf, in dem zwei zweite Gehäuse-Bohrungen 21, 22 mit zueinander parallelen Achsen 21a, 22a und einander durchdringend ausgebildet sind, die also ebenfalls einen 8-förmigen Querschnitt begrenzen. In den zweiten Gehäuse-Bohrungen 21, 22 sind zwei mit dem zweiten Getriebe 8 gekuppelte zweite Schnecken-Wellen 23, 24 angeordnet, die ebenfalls gleich- oder gegensinnig drehantreibbar sind. Der zweite Extruder 2 weist anschließend an das zweite Getriebe 8 einen Zuführ-Stutzen 25 auf. An den Zuführ-Stutzen 25 schließen sich in Förderrichtung 16 eine oder mehrere Behandlungs-Zonen 26 an. Am Ende des zweiten Extruders 2 ist wiederum eine Austrags-Zone 27 vorgesehen.

Bei dem ersten Ausfiihrungsbeispiel nach den Fig. 1 bis 7 ist in der Übergabe-Zone 28 ein Zwischen-Gehäuse 29 angebracht, das einen mit den ersten Gehäuse-Bohrungen 12, 13 verbundenen Innenraum 30 aufweist. Das Zwischen-Gehäuse 29 ist mittels einer Schiebe-Verbindung 31 mit dem Gehäuse 11 des ersten Extruders verbunden, über die thermische Ausdehnungen kompensiert werden. Der Innenraum 30 ist durch zwei 8-förmig ineinander greifende Bohrungen gebildet, die achsparallel zu den Achsen 12a, 13a verlaufen. Der Durchmesser D₂ dieser Bohrungen ist gleich oder etwas größer als der Durchmesser D₁ der ersten Gehäusebohrungen 12, 13. Diese Bohrungen sind durchgängig; das Zwischen-Gehäuse 29 ist an seinem dem Gehäuse 11 abgewandten Ende also offen.

Das Zwischen-Gehäuse 29 weist radial zu den Achsen 12a, 13a, also quer zu der durch diese Achsen 12a, 13 a aufgespannten Horizontalebene, eine Übergabe-Öffnung 32 auf, die in den Zuführ-Stutzen 25 des zweiten Extruders 2 einmündet. Der im Zuführ-Stutzen 25 ausgebildete ÜberströmKanal 33 hat einen Durchmesser D₃. Es gilt D₁ ≤ D2 ≤ D₃. Hierdurch wird verhindert, dass im Strömungsweg des vom ersten Extruder 1 zum zweiten Extruder 2 strömenden Stoffes, insbesondere aufgeschmolzenen Kunststoffes, sich tote Ecken bilden, an denen sich Kunststoff absetzt.

Das Zwischen-Gehäuse 29 liegt mit einer Anlage-Fläche 34 auf einer zugewandten Anlage-Fläche 35 des Zuführ-Stutzens 25 auf. Das Zwischen-Gehäuse 29 ist nicht mit dem Zuführ-Stutzen 25 verschraubt. In der Anlage-Fläche 35 sind gemäß Fig. 3 Ausnehmungen 36 ausgebildet, in denen Dichtungs-Packungen 37 angeordnet sind, die dichtend gegen die Anlage-Fläche 34 anliegen.

Im Zwischen-Gehäuse 29 ist ein Dreh-Schiebe-Körper 38 angeordnet, der um seine Mittel-Längs-Achse 39 drehbar und in Richtung seiner Mittel-Längs-Achse zwischen zwei End-Lagen verschiebbar ist. Die Mittel-Längs-Achse 39 verläuft parallel zu der durch die Achsen 12a, 13a aufgespannten Ebene und senkrecht zu jeder dieser Achsen 12a, 13a und parallel zu den Achsen 21 a, 22a der zweiten Gehäuse-Bohrungen des zweiten Extruders 2. Der Dreh-Schiebe-Körper 38 ist in seiner Außenform zylindrisch ausgebildet und in zwei angepassten Führungs-Bohrungen 40, 41 des Zwischen-Gehäuses 29 verschiebbar geführt.

Der Dreh-Schiebe-Körper 38 weist zwei einander 8-förmig durchdringende Durchgangs-Bohrungen 42, 43 auf, deren Achsen 42a, 43a mit den Achsen 12a, 13a fluchten. Diese Durchgangs-Bohrungen 42, 43 haben jeweils einen Durchmesser D₂. Diese Durchgangs-Bohrungen 42, 43 sind in den Fig. 1 und 2 in ihrer Funktions-Stellung vor den ersten Gehäuse-Bohrungen 12, 13, also in einer Schnecken-Wellen-Zieh-Stellung, dargestellt, in der der Dreh-Schiebe-Körper 38 gleichzeitig die radial ausmündende Übergabe-Öffnung 32 verschließt.

In dieser Stellung des Dreh-Schiebe-Körpers 38 können die ersten Schnecken-Wellen 14, 15 aus den ersten Gehäuse-Bohrungen 12, 13 herausgezogen werden, und zwar durch den Dreh-Schiebe-Körper 38 des Zwischen-Gehäuses 29 hindurch. Außerdem kann in dieser Endlage des Dreh-Schiebe-Körpers 38 beim Anfahren der Anlage Kunststoff ausgeschleust werden.

In Richtung der Mittel-Längs-Achse 39 des Dreh-Schiebe-Körpers 38 ist neben dem Paar von Durchgangs-Bohrungen 42, 43 ein Paar Sack-Bohrungen 44, 45 ausgebildet, die einander in gleicher Weise 8-förmig durchdringen und deren Achsen 44a, 45a wiederum auch in Überdeckungsstellung mit den Achsen 12a, 13a mit diesen fluchten. Der Durchmesser dieser Sack-Bohrungen 44, 45 ist ebenfalls D₂. Quer zu den Achsen 44a, 45a der Sack-Bohrungen 44, 45 ist im Dreh-Schiebe-Körper 38 eine Verbindungs-Bohrung 46 ausgebildet, deren Durchmesser D₃ beträgt. Die Sack-Bohrungen 44, 45 und die Verbindungs-Bohrung 46 bilden einen Übergabe-Kanal. Beim Verschieben des Dreh-Schiebe-Körpers 38 aus der bereits geschilderten Schnecken-Wellen-Zieh-Stellung in seine andere Endlage, werden die ersten Gehäuse-Bohrungen 12, 13 des ersten Extruders 1 über das Zwischen-Gehäuse 29 und die Sack-Bohrungen 44, 45 mit dem Zuführ-Stutzen 25 und damit mit dem zweiten Extruder 2 verbunden. In dieser Übergabe-Stellung des Dreh-Schiebe-Körpers 38 befindet sich dieser also in der Betriebs-Stellung der Anlage. Durch Verschwenken des Dreh-Schiebe-Körpers 38 in dieser zweiten Endlage, also der Übergabe-Stellung, um die Achse 39 kann eine Drosselung des Kunststoff-Flusses erreicht werden, da - wie Fig. 6 und 7 entnehmbar ist - der freie Querschnitt zwischen der Verbindungs-Bohrung 46 und der Übergabe-Öffnung 32 im Zwischen-Gehäuse 29 veränderbar ist. Bei einer Verschwenkung um 90° kann mittels des Dreh-Schiebe-Körpers 38 die Übergabe-Öffnung 32 vollständig verschlossen werden, und zwar in den beiden Endlagen des Dreh-Schiebe-Körpers 38.

Die Verschiebungen und die Schwenk-Bewegungen des Dreh-Schiebe-Körpers 38 werden mittels eines Dreh-Schiebe-Antriebs 47 durchgeführt, der mittels einer Halte-Einrichtung 48 am Gehäuse 11 des ersten Extruders 1 angebracht ist. Ein solcher Antrieb kann als handelsüblicher mittels Druckmittel beaufschlagbarer Kolben-Zylinder-Antrieb ausgebildet sein.

Selbstverständlich kann der Schiebe-Körper 38 auch ohne die zum Drosseln dienende Dreh-Funktion ausgestaltet sein. In diesem Fall ist der Antrieb 47 nur als reiner Schiebe-Antrieb ausgebildet, der den Schieber 38 zwischen zwei Endlagen, also der Schnecken-Wellen-Zieh-Stellung und der Übergabe-Stellung, verschiebt.

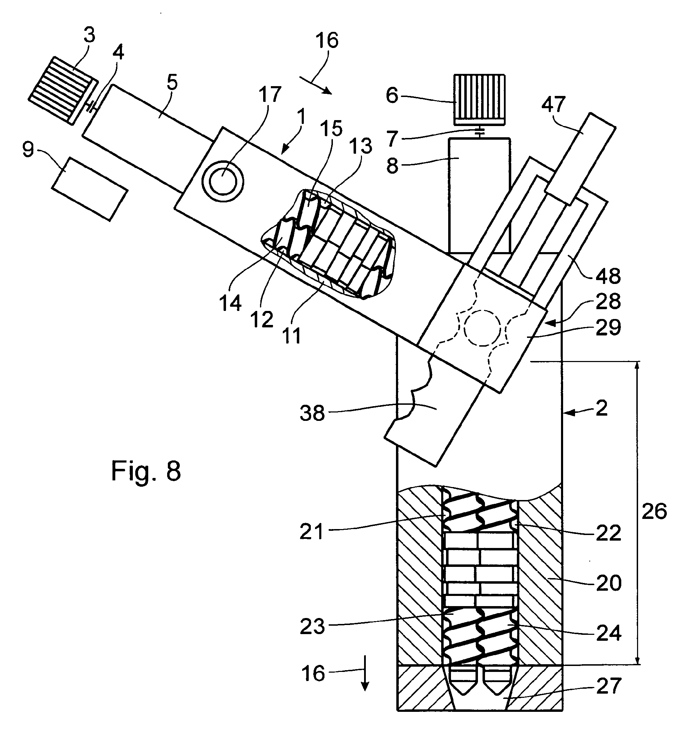

Bei dem Ausfiihrungsbeispiel nach Fig. 8 bis 10 ist kein gesondertes Zwischen-Gehäuse vorgesehen; in der Übergabe-Zone 28 mündet vielmehr die Übergabe-Öffnung 32' direkt aus dem Gehäuse 11 in den Zuführ-Stutzen 25. Im Gehäuse 11 sind Führungs-Bohrungen 40', 41 ausgebildet, in denen ein Dreh-Körper 49 drehbar geführt ist. Der Dreh-Körper 49 weist zwei Durchgangs-Bohrungen 42, 43 auf, für die die obige Beschreibung gilt. Die Schwenk-Bewegung des Dreh-Körpers 49 um seine Mittel-Längs-Achse 39' erfolgt mittels eines nicht dargestellten Antriebs, der dem nach dem ersten Ausführungsbeispiel entspricht, aber nur eine Drehbewegung ermöglicht. Ansonsten gilt die obige Beschreibung zum ersten Ausführungsbeispiel.

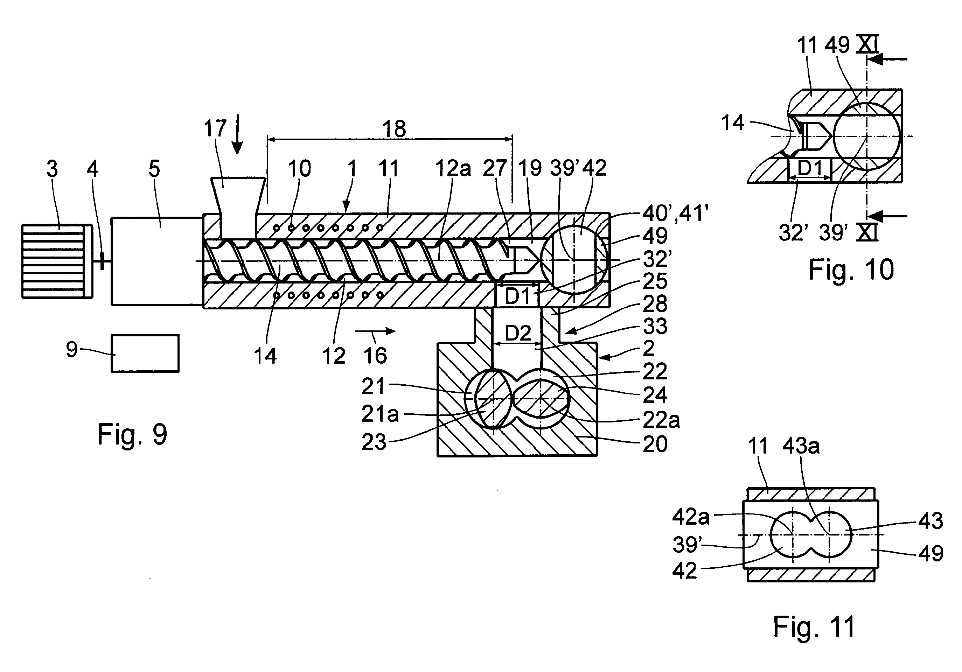

Bei dem dritten Ausfiihrungsbeispiel nach Fig. 11 und 12 ist das Gehäuse 11 an seiner der Austrags-Zone 27 benachbarten Stirnseite mittels eines Deckels 50 verschlossen, der mit Schrauben 51 befestigt und damit abnehmbar ist. Nach dem Abnehmen des Deckels 50 können die ersten Schnecken-Wellen 14, 15 gezogen werden.

## Patentansprüche

1. Anlage zum Aufbereiten von Stoffen,
- mit einer ersten Schneckenmaschine (1), die ein Gehäuse (11) mit mindestens einer ersten Gehäuse-Bohrung (12, 13) mit einer Achse (12a, 13a) und eine in der mindestens einen ersten Gehäuse-Bohrung (12, 13) angeordnete erste Schnecken-Welle (14, 15) aufweist,
- mit einer der ersten Schneckenmaschine (1) nachgeordneten zweiten Schneckenmaschine (2) und
- mit einer die erste Schneckenmaschine (1) mit der zweiten Schneckenmaschine (2) verbindenden Übergabe-Zone (28), in der eine radial zur Achse (12a, 13a) verlaufende und zur zweiten Schneckenmaschine (2) gerichtete Übergabe-Öffnung (32, 32') vorgesehen ist,
**dadurch gekennzeichnet,**
**dass** die mindestens eine erste Gehäuse-Bohrung (12, 13) in Richtung der Achse (12a, 13a) mittels eines Verschließ-Elementes verschließbar ist.

2. Anlage nach Anspruch 1, **dadurch gekennzeichnet,**
**dass** als Verschließ-Element ein abnehmbarer Deckel (50) vorgesehen ist.

3. Anlage nach Anspruch 1 oder 2, **dadurch gekennzeichnet,**
**dass** als Verschließ-Element ein bewegbarer Körper (38, 49) vorgesehen ist, der mindestens eine mit der mindestens einen ersten Gehäuse-Bohrung (12, 13) in eine fluchtende Schnecken-Wellen-Zieh-Stellung bringbare Durchgangs-Bohrung (42, 43) aufweist und der in eine Verschließ-Stellung bringbar ist.

4. Anlage nach Anspruch 3, **dadurch gekennzeichnet,**
**dass** der Körper als Dreh-Körper (49) ausgebildet ist, und durch Drehen um seine Mittel-Längs-Achse (39') einerseits in die Schnecken-Wellen-Zieh-Stellung und andererseits in die Verschließ-Stellung bringbar ist.

5. Anlage nach Anspruch 3, **dadurch gekennzeichnet,**
**dass** der Körper als Schiebe-Körper (38) ausgebildet ist und
**dass** der Schiebe-Körper (38) neben der mindestens einen Durchgangs-Bohrung (42, 43) einen Übergabe-Kanal (44, 45, 46) aufweist, der in der Verschließ-Stellung die mindestens eine erste Gehäuse-Bohrung (12, 13) und die Übergabe-Öffnung (32) in einer Übergabe-Stellung miteinander verbindet.

6. Anlage nach Anspruch 5, **dadurch gekennzeichnet,**
**dass** der Schiebe-Körper als Dreh-Schiebe-Körper (38) ausgebildet ist und
**dass** in der Übergabe-Stellung der Übergabe-Kanal (44, 45, 46) mit der Übergabe-Öffnung (32) in Teil-Überdeckung bringbar ist.

7. Anlage nach einem der Ansprüche 1 bis 6, **dadurch gekennzeichnet, dass** der Körper im Gehäuse (11) der ersten Schneckenmaschine (1) angeordnet ist.

8. Anlage nach einem der Ansprüche 1 bis 6, **dadurch gekennzeichnet, dass** der Körper in einem an das Gehäuse (11) der ersten Schneckenmaschine (1) angefügten Zwischen-Gehäuse (29) angeordnet ist.

9. Anlage nach einem der Ansprüche 3 bis 8, **dadurch gekennzeichnet, dass** der Körper mittels eines Antriebs (47) bewegbar ist.
